# EUROPÄISCHE PATENTSCHRIFT

(11) **EP 4 558 010 B1**
(45) Veröffentlichungstag und Bekanntmachung des Hinweises auf die Patenterteilung: **04.11.2026**
(21) Anmeldenummer: 23742189.6
(22) Anmeldetag: 06.07.2023
(51) Int. Cl.: A47B 88/90, F16B 12/20

(54) **SCHUBLADENSEITENWAND FÜR EINE SCHUBLADE**
LATERAL WALL FOR A DRAWER
PAROI LATÉRALE DE TIROIR

(30) Priorität: 21.07.2022 AT 5011922 U
(43) Veröffentlichungstag der Anmeldung: 28.05.2025
(73) Patentinhaber: JULIUS BLUM GMBH, 6973 Höchst (AT)
(72) Erfinder: SPERGER, Gerald, 6971 Hard (AT); VON DER WELLEN, Benjamin, 6700 Bludenz (AT)
(74) Vertreter: Torggler & Hofmann Patentanwälte - Innsbruck
(86) Internationale Anmeldenummer: PCT/AT2023/060219
(87) Internationale Veröffentlichungsnummer: WO 2024/016032

(56) Entgegenhaltungen:
- EP-A1- 3 808 997
- WO-A2-2010/036215

## Beschreibung

Die Erfindung betrifft eine Schubladenseitenwand für eine Schublade gemäß dem Oberbegriff des Anspruchs 1 sowie eine Anordnung aus wenigstens einer solchen Schubladenseitenwand und wenigstens einer Schubladenausziehführung.

Aus dem Stand der Technik sind Schubladenseitenwände für eine Schublade bekannt, welche wenigstens einen Rückwandhalter, mit welchem eine Rückwand quer zur Schubladenseitenwand haltbar ist, umfassen.

Nachteilig dabei ist, dass vom Rückwandhalter nur Rückwände mit einer relativ großen Mindestdicke haltbar sind, da die Befestigungsmittel des Rückwandhalters diese Mindestdicke erfordern. Das bedingt einen erhöhten Materialaufwand und erhöhte Kosten. Außerdem ist zur Befestigung der Rückwand häufig auch ein zusätzlicher Arbeitsschritt unter Zuhilfenahme eines Werkzeugs erforderlich.

Die EP 3 808 997 A1 zeigt einen Rotationsdübel mit drehbar gelagerten Halteorganen, welche keilförmig ausgebildete Eingreifelemente aufweisen. Die WO 2010/036215 A2 zeigt eine Schubladenseitenwand, in welche eine Rückwand eingerastet werden kann.

Die Aufgabe der vorliegenden Erfindung besteht darin, die aus dem Stand der Technik bekannten Nachteile zumindest teilweise zu beheben und eine gegenüber dem Stand der Technik verbesserte Schubladenseitenwand und eine Anordnung aus wenigstens einer solchermaßen verbesserten Schubladenseitenwand und wenigstens einer Schubladenausziehführung anzugeben, wobei sich die Schubladenseitenwand insbesondere dadurch auszeichnet, dass auch dünne Rückwände am Rückwandhalter haltbar sind und/oder der Montageaufwand der Rückwand an der Schubladenseitenwand reduziert ist.

Diese Aufgabe wird gelöst durch die Merkmale der Ansprüche 1 und 12.

Bei der Schubladenseitenwand ist es also vorgesehen, dass der Rückwandhalter wenigstens eine Klemmvorrichtung aufweist, mit welcher die Rückwand klemmend haltbar ist, wobei die wenigstens eine Klemmvorrichtung wenigstens einen Klemmhebel aufweist, welcher zwischen einer Klemmstellung und einer Lösestellung bewegbar ist, wobei der wenigstens eine Klemmhebel um eine Schwenkachse verschwenkbar am wenigstens einen Rückwandhalter gelagert ist, die Schwenkachse im Wesentlichen normal zur Schubladenseitenwand verläuft, und der Klemmhebel wenigstens eine Schneide aufweist, welche im Zuge einer Bewegung des Klemmhebels in die Klemmstellung in das Material der Rückwand versenkbar ist.

Die Klemmvorrichtung hat mehrere Vorteile: Es müssen keine Befestigungsmittel in das Material der Rückwand eingebracht werden, sodass auch dünne Rückwände vom Rückwandhalter haltbar sind. Weiterhin können unterschiedliche dicke Rückwände mittels der Klemmvorrichtung befestigt werden, wohingegen die aus dem Stand der Technik bekannten Rückwandhalter häufig nur auf Rückwände mit einer bestimmten Dicke ausgelegt sind. Und schließlich ermöglicht die Klemmvorrichtung eine werkzeuglose Befestigung der Rückwand am Rückwandhalter, wodurch der Montageaufwand reduziert wird.

Vorteilhafte Ausführungsformen sind in den abhängigen Ansprüchen definiert.

Weitere Einzelheiten und Vorteile der Erfindung werden anhand der Figurenbeschreibung unter Bezugnahme auf die Zeichnungen im Folgenden näher erläutert. Darin zeigen:
- Fig. 1: eine Schublade in einer perspektivischen Ansicht von vorne,
- Fig. 2: die Schublade ohne Frontblende in einer perspektivischen Ansicht von hinten,
- Fig. 3: einen vergrößerten Ausschnitt vom Bereich des Rückwandhalters, wobei der Schubladenboden und die Rückwand nicht mit der Schubladenseitenwand verbunden sind,
- Fig. 4, 5: eine Schubladenseitenwand in einer perspektivischen Ansicht (Fig. 4) und in einer Explosionsansicht (Fig. 5),
- Fig. 6, 7: einen vergrößerten Ausschnitt vom Bereich des Frontwandhalters, wobei die Fig. 6 einen unverbundenen Zustand und die Fig. 7 einen verbundenen Zustand des Schubladenbodens mit der Schubladenseitenwand zeigt,
- Fig. 8: eine vergrößerte Querschnittsansicht aus dem Bereich des Befestigungsmittels 13,
- Fig. 9, 10: einen Rückwandhalter gemäß einem ersten, erfindungsgemäßen Ausführungsbeispiel in einer perspektivischen Ansicht von hinten (Fig. 9) und von vorne (Fig. 10),
- Fig. 11 - 15: verschiedene Ansichten vom Bereich des Rückwandhalters während eines Befestigungsvorgangs der Rückwand, wobei die Fig. 12 und 14 Querschnittsansichten und die Fig. 11, 13 und 15 perspektivische Ansichten von hinten zeigen,
- Fig. 16, 17: einen vergrößerten Ausschnitt vom Bereich des Rückwandhalters, wobei die Rückwand über Schrauben am Rückwandhalter befestigt wird,
- Fig. 18: eine Anordnung aus einer Schubladenseitenwand und einer Schubladenausziehführung in einer perspektivischen Ansicht,
- Fig. 19 - 24: einen Rückwandhalter gemäß einem zweiten, nicht erfindungsgemäßen Ausführungsbeispiel jeweils ohne und mit Rückwand in einer perspektivischen Ansicht von hinten (Fig. 19, 22), von vorne (Fig. 20, 23) und in einer Draufsicht von oben (Fig. 21, 24),
- Fig. 25 - 29: einen Rückwandhalter gemäß einem dritten, nicht erfindungsgemäßen Ausführungsbeispiel in einer perspektivischen Ansicht von hinten (Fig. 25, 28, 29), von vorne (Fig. 27) und in einer Draufsicht von oben (Fig. 26), wobei die Fig. 28 in einer aufgeschnittenen Ansicht eine verbundene Holzrückwand und die Fig. 29 in einer aufgeschnittenen Ansicht eine verbundene Metallrückwand zeigt,
- Fig. 30, 31: einen Rückwandhalter gemäß einem vierten, nicht erfindungsgemäßen Ausführungsbeispiel in einer perspektivischen Ansicht von hinten, und zwar ohne Rückwand (Fig. 30) und mit Rückwand (Fig. 31),
- Fig. 32 - 34: einen Frontwandhalter zum Verbinden einer Frontblende mit einer Schubladenseitenwand, wobei Fig. 32 eine perspektivische Ansicht, Fig. 34 eine Explosionsansicht und Fig. 33 die Einstellung eines Verbindungselements relativ zum Frontwandhalter zeigt,
- Fig. 35 - 37: ein weiteres, erfindungsgemäßes Ausführungsbeispiel eines Klemmhebels in unterschiedlichen Ansichten,
- Fig. 38, 39: eine Anordnung aus einer Schubladenseitenwand, einer Rückwand und einem Rückwandhalter gemäß einem weiteren, erfindungsgemäßen Ausführungsbeispiel und in einer Querschnittsansicht, wobei der Klemmhebel in Fig. 38 in der Lösestellung und in Fig. 39 in der Klemmstellung angeordnet ist,
- Fig. 40 - 42: eine Anordnung aus einer Schubladenseitenwand, einem Rückwandhalter und einer Rückwand gemäß einem weiteren, erfindungsgemäßen Ausführungsbeispiel, wobei die Rückwand unterschiedliche Relativstellungen zur Schubladenseitenwand einnimmt, und
- Fig. 43: eine Schubladenseitenwand mit einem Rückwandhalter gemäß einem weiteren, erfindungsgemäßen Ausführungsbeispiel.

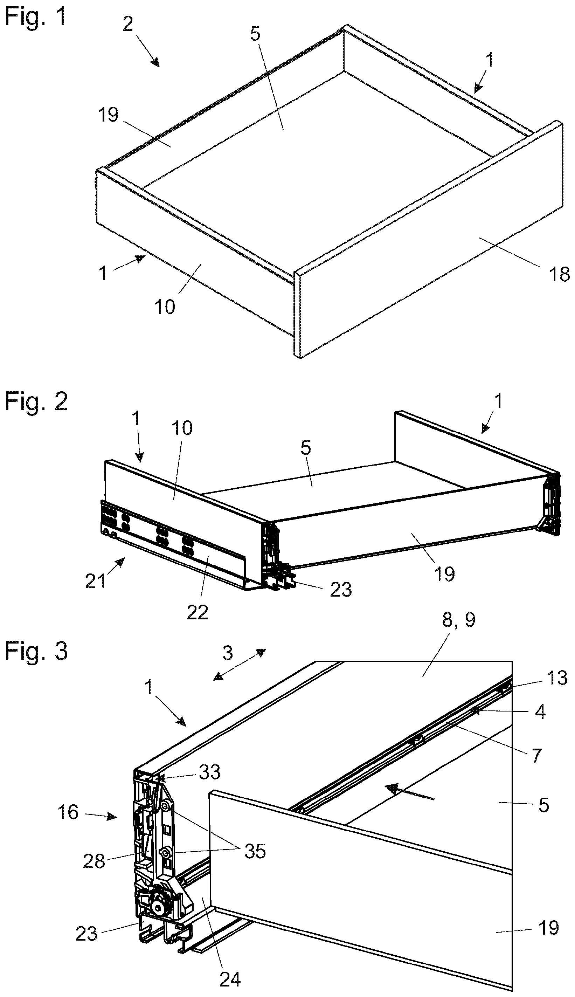

Die Fig. 1 zeigt eine Schublade 2 in einer perspektivischen Ansicht von vorne. In der Fig. 2 die Schublade 2 ohne Frontblende 18 in einer perspektivischen Ansicht von hinten. Die Fig. 3 zeigt einen vergrößerten Ausschnitt vom Bereich des Rückwandhalters 16, wobei der Schubladenboden 5 und die Rückwand 19 nicht mit der Schubladenseitenwand 1 verbunden sind.

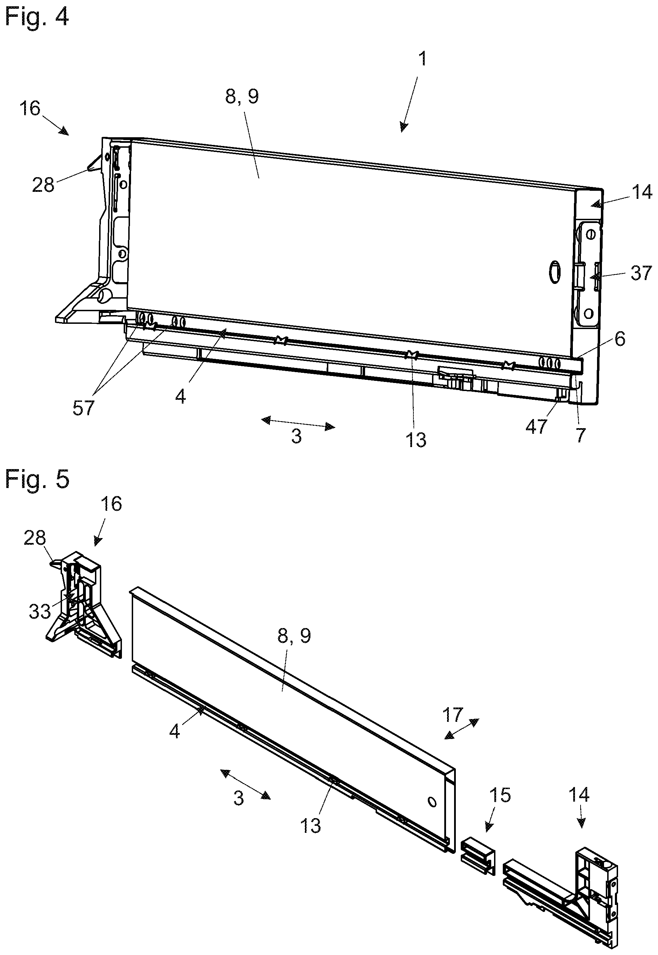

Die Schublade 2 weist zwei parallel und in einem Abstand voneinander angeordnete Schubladenseitenwände 1, eine Rückwand 19, eine Frontblende 18, und einen Schubladenboden 5 auf, bevorzugt wobei die Rückwand 19 und der Schubladenboden 5 im Wesentlichen dieselbe Dicke 26, 27, besonders bevorzugt von weniger als 1 cm, aufweisen. Die Dicke 26 des Schubladenbodens 5 ist in der Fig. 5, die Dicke 27 der Rückwand 19 dargestellt.

In einem bevorzugten Ausführungsbeispiel sind die Rückwand 19 und der Schubladenboden 5 durch eine gemeinsame Fügebewegung mit der Schubladenseitenwand 1, besonders bevorzugt klemmend, befestigbar. Die gemeinsame Fügebewegung ist in der Fig. 3 durch einen Pfeil angedeutet.

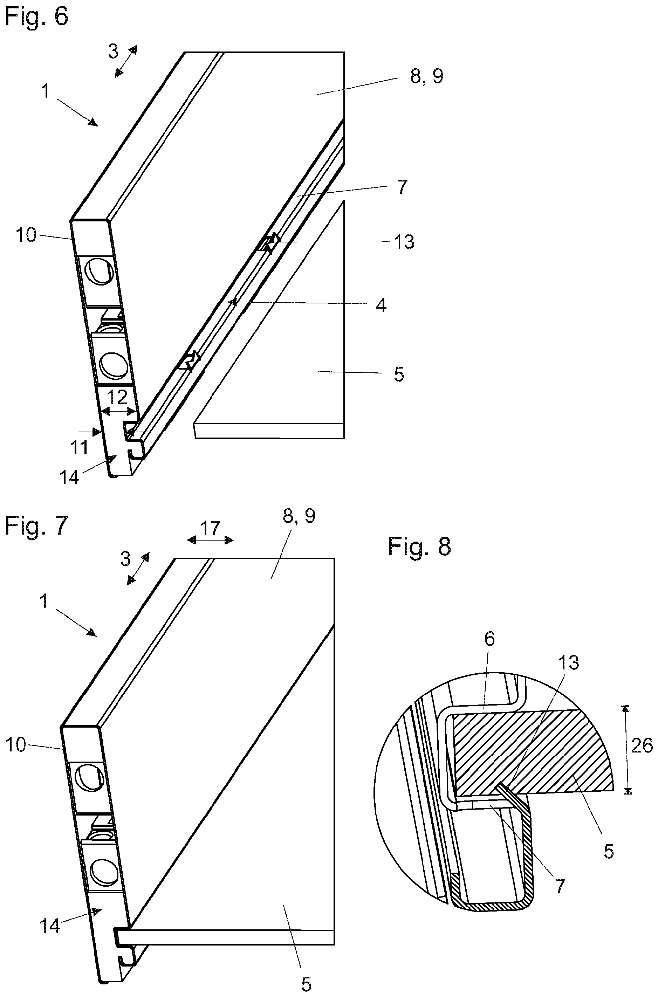

Die Fig. 4 und 5 zeigen eine Schubladenseitenwand 1 in einer perspektivischen Ansicht (Fig. 4) und in einer Explosionsansicht (Fig. 5), die Fig. 6 und 7 einen vergrößerten Ausschnitt vom Bereich des Frontwandhalters 14, wobei die Fig. 6 einen unverbundenen Zustand und die Fig. 7 einen verbundenen Zustand des Schubladenbodens 5 mit der Schubladenseitenwand 1 zeigt. Die Fig. 8 zeigt eine vergrößerte Querschnittsansicht aus dem Bereich des Befestigungsmittels 13,

Die Schubladenseitenwand 1 für eine Schublade 2 umfasst wenigstens eine sich in eine Längsrichtung 3 der Schubladenseitenwand 1 verlaufende Nut 4 zur Aufnahme eines Randes eines Schubladenbodens 5, wobei die Nut 4 wenigstens einen oberen Haltesteg 6 und einen davon beabstandeten und im Wesentlichen parallel verlaufenden unteren Haltesteg 7 aufweist, zwischen denen der Rand des Schubladenbodens 5 anordenbar ist. Zumindest eine Seitenfläche 8 der Schubladenseitenwand 1 ist aus einem einstückigen Blechstück 9 gebildet, wobei die Nut 4 samt den beiden Haltestegen 6, 7 in das Blechstück 9 durch Umbiegungen eingeformt ist.

Die Schubladenseitenwand 1 ist im Wesentlichen quaderförmig und in einer Querschnittsebene senkrecht zur Längsrichtung 3 der Schubladenseitenwand 1 im Wesentlichen rechteckig ausgebildet ist.

An der Nut 4, vorzugsweise am unteren Haltesteg 7 der Nut 4, sind Befestigungsmittel 13, vorzugsweise Krallen, zur, vorzugsweise klemmenden, Befestigung des Randes des Schubladenbodens 5 angeordnet. Im dargestellten Ausführungsbeispiel sind die Befestigungsmittel 13 einstückig im Blechstück 9 ausgebildet, insbesondere ausgestanzt.

Wie insbesondere aus Fig. 8 hervorgeht, können die Befestigungsmittel 13 Widerhaken aufweisen, welche beim Einschieben des Schubladenbodens 5 überfahrbar sind, welche sich aber bei einer Bewegung des Schubladenbodens 5 in eine Richtung entgegen der Einschieberichtung in das Material des Schubladenbodens 5 verkrallen.

Das Blechstück 9 kann wie im dargestellten Ausführungsbeispiel ein Hohlprofil ausbilden, vorzugsweise mit einem U-förmigen Querschnitt.

In das Hohlprofil ist wenigstens ein, vorzugsweise wenigstens zwei voneinander in Längsrichtung 3 der Schubladenseitenwand 1 beabstandete, Profilkörper 14, 15, 16, vorzugsweise aus Kunststoff, eingesetzt, welcher das Hohlprofil zumindest in eine Richtung 17 quer zur Längsrichtung 3 der Schubladenseitenwand 1 stabilisiert, vorzugsweise wobei der wenigstens eine Profilkörper 14, 15, 16 eine der Innenform des Hohlprofil angepasste Form aufweist.

Der wenigstens eine Profilkörper 14, 15, 16 weist zumindest im Bereich der Nut 4 dieselbe Querschnittsform auf wie das Blechstück 9.

Bei dem in der Fig. 5 dargestellten Ausführungsbeispiel ist wenigstens ein Profilkörper 14 in einem vorderen Bereich der Schubladenseitenwand 1 angeordnet und dazu ausgebildet, eine Frontblende 18 zu halten. Wenigstens ein Profilkörper 16 ist in einem hinteren Bereich der Schubladenseitenwand 1 angeordnet und dazu ausgebildet, eine Rückwand 19 zu halten. Wenigstens ein Profilkörper 15 ist in einem mittleren Bereich der Schubladenseitenwand 1 angeordnet. Der Profilkörper 15 kann bei kurzen Nennlängen weggelassen werden.

Die Profilkörper 14, 15 und/oder 16 können über eine Verhalsung 57 mit dem Hohlprofil verbunden sein.

Die Schubladenseitenwand 1 weist eine Außenfläche 10 auf, welche im Wesentlichen parallel zur Seitenfläche 8 mit der Nut 4 ausgerichtet.

Wie insbesondere aus der Fig. 6 hervorgeht, ist die Nut 4 gegenüber der Seitenfläche 8 in die Schubladenseitenwand 1 versenkt ausgebildet. Die Schubladenseitenwand 1 weist im Bereich der Nut 4 eine reduzierte Dicke 11 auf, vorzugsweise wobei die Dicke 11 im Bereich der Nut 4 zwischen einem Drittel und einer Hälfte der Dicke 12 der Schubladenseitenwand in einem Bereich außerhalb der Nut 4 reduziert ist.

Die Schubladenseitenwand 1 in einem Bereich außerhalb, vorzugsweise oberhalb, der Nut 4 im Wesentlichen eine konstante Dicke 12 auf.

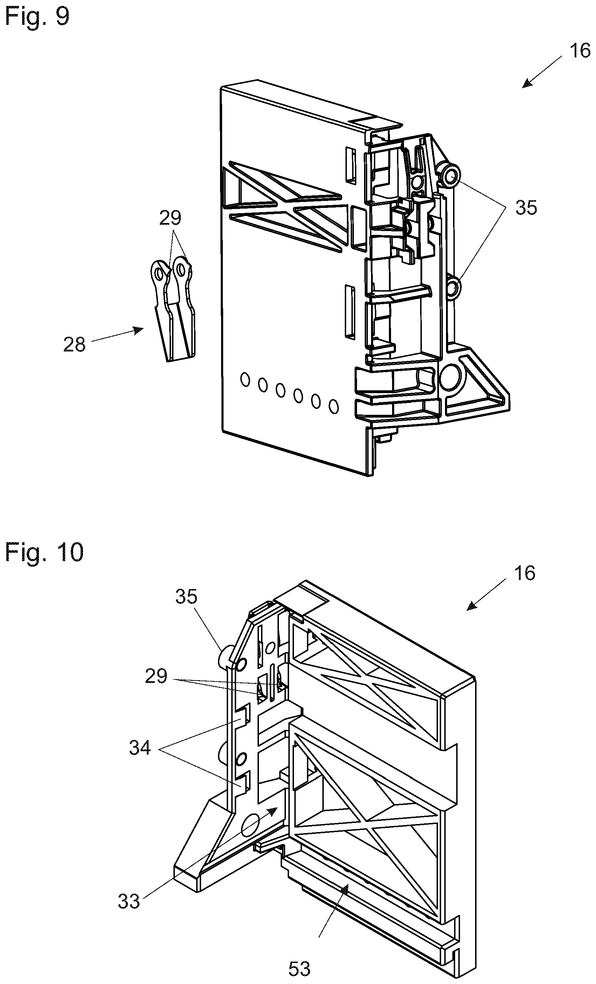

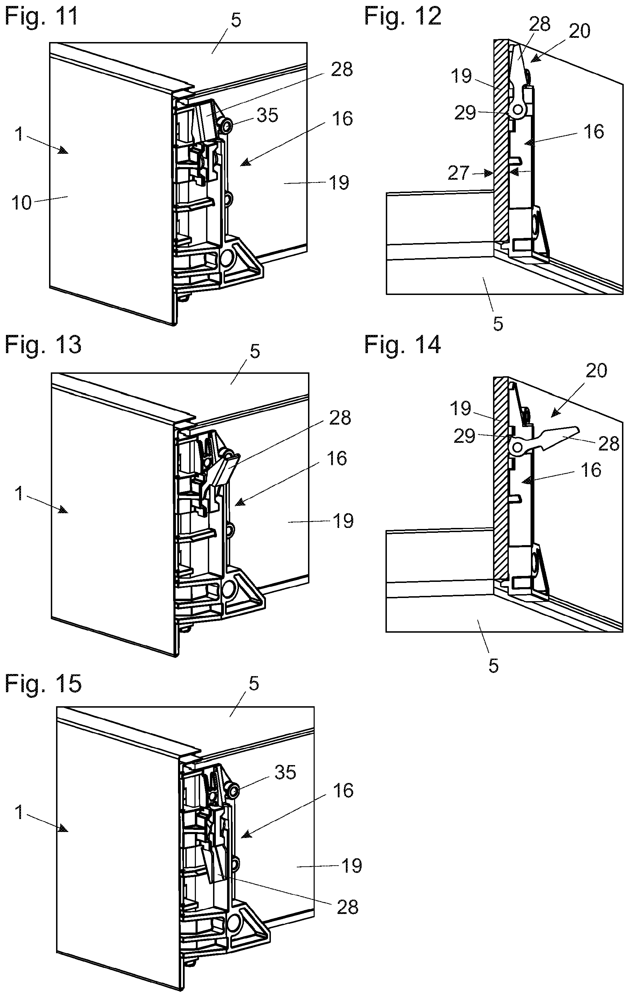

Die Fig. 9 und 10 zeigen einen Rückwandhalter 16 gemäß einem ersten, erfindungsgemäßen Ausführungsbeispiel in einer perspektivischen Ansicht von hinten (Fig. 9) und von vorne (Fig. 10). Die Fig. 11 bis 15 zeigen verschiedene Ansichten vom Bereich des Rückwandhalters 16 während eines Befestigungsvorgangs der Rückwand 19, wobei die Fig. 12 und 14 Querschnittsansichten und die Fig. 11, 13 und 15 perspektivische Ansichten von hinten zeigen.

Die Schubladenseitenwand 1 umfasst wenigstens einen Rückwandhalter 16, mit welchem eine Rückwand 19 quer zur Schubladenseitenwand 1 haltbar ist, wobei der Rückwandhalter 16 wenigstens eine Klemmvorrichtung 20 aufweist, mit welcher die Rückwand 19 klemmend haltbar ist.

Die wenigstens eine Klemmvorrichtung 20 kann wenigstens einen Klemmhebel 28 aufweisen, welcher zwischen einer Klemmstellung (vgl. Fig. 11) und einer Lösestellung (vgl. Fig. 15) bewegbar ist, vorzugsweise wobei der Klemmhebel 28 wie im dargestellten Ausführungsbeispiel wenigstens eine Schneide 29 aufweist (vgl. Fig. 9), welche im Zuge einer Bewegung des Klemmhebels 28 in die Klemmstellung in das Material der Rückwand 19 versenkbar ist (vgl. Fig. 12).

Der wenigstens eine Rückwandhalter 16 kann wenigstens eine quer zu einer Längsrichtung 3 der Schubladenseitenwand 1 verlaufende Haltenut 33 aufweisen, in welcher die Rückwand 19 bereichsweise anordenbar ist (vgl. Fig. 10).

Der wenigstens eine Rückwandhalter 16 kann wenigstens eine Spielausgleichsvorrichtung 34 aufweisen, welche vorzugsweise wenigstens einen federnden Lappen aufweist, umfasst, mit welcher die Rückwand 19 in Richtung der Schubladenseitenwand 1 drängbar ist.

Der Rückwandhalter 16 weist zumindest im Bereich der Nut 4 dieselbe Querschnittsform auf wie das Blechstück 9. Insbesondere umfasst der Rückwandhalter 16 eine Aufnahmenut 53, in welcher die Nut 4 des Blechstücks 9 zumindest bereichsweise anordenbar ist.

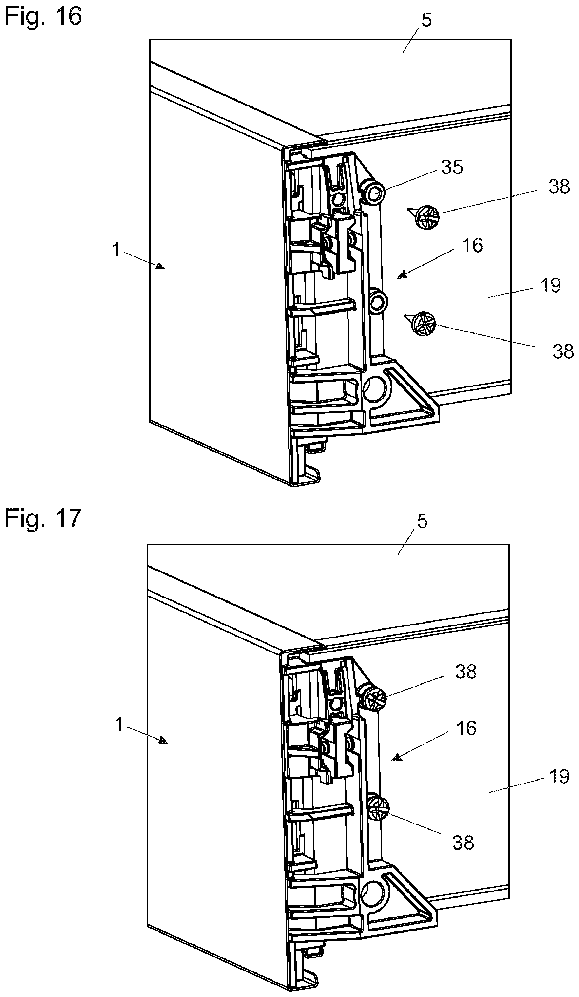

Der wenigstens eine Rückwandhalter 16 kann wenigstens eine Befestigungsvorrichtung 35 aufweisen, über welche die Rückwand 19 zusätzlich zur wenigstens eine Klemmvorrichtung 20 befestigbar ist. In den Fig. 16 und 17 ist ein vergrößerter Ausschnitt vom Bereich des Rückwandhalters 16 dargestellt, wobei die Rückwand 19 über Schrauben 38 am Rückwandhalter befestigt wird.

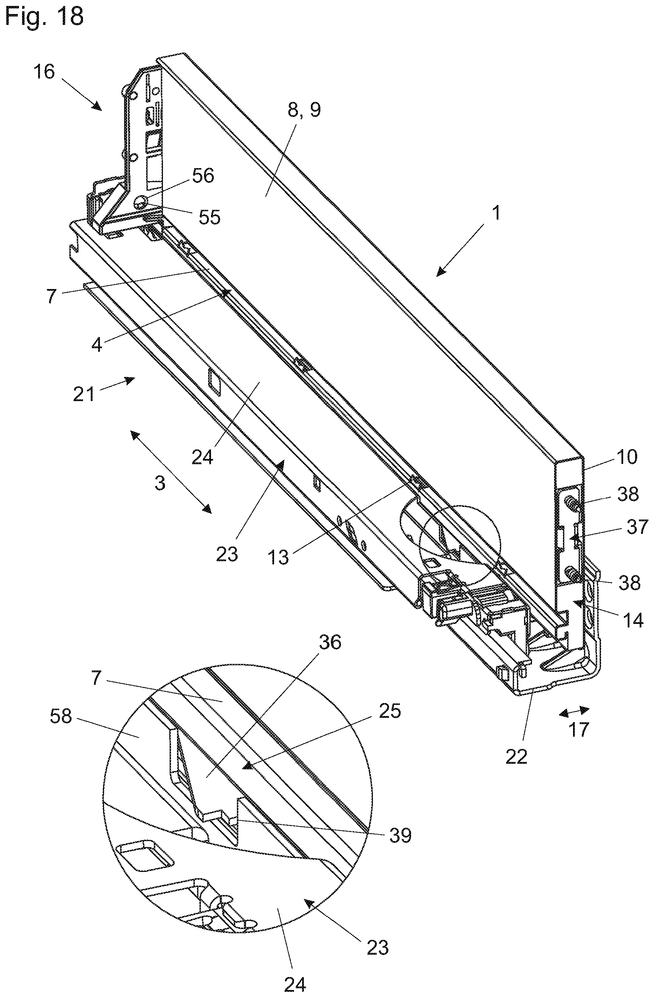

Die Fig. 18 zeigt eine Anordnung aus einer Schubladenseitenwand 1 und einer Schubladenausziehführung 21 in einer perspektivischen Ansicht.

Die Schubladenausziehführung 21 weist eine mit einem Möbelkorpus zu verbindende Korpusschiene 22 und wenigstens eine relativ dazu verschiebbare Ladenschiene 23 auf. Zwischen der Korpusschiene 22 und der Ladenschiene 23 kann auch noch eine Mittelschiene angeordnet sein.

Die Ladenschiene 23 weist wenigstens einen Auflagesteg 24 für den Schubladenboden 5 auf, welcher in einem Koppelzustand, in welchem die Schubladenseitenwand 1 mit der Schubladenausziehführung 21 gekoppelt ist, im Wesentlichen in einer Ebene mit dem unteren Haltesteg 7 der Nut 4 der Schubladenseitenwand 1 angeordnet ist.

Die Schubladenseitenwand 1 ist in einem Koppelzustand zumindest bereichsweise zwischen einem Befestigungssteg der Korpusschiene 22 und einem parallel dazu angeordneten Vertikalsteg 58 der Ladenschiene 23 angeordnet.

Es kann wenigstens eine Koppelvorrichtung 25 vorgesehen sein, mit welcher die Schubladenseitenwand 1, vorzugsweise lösbar, mit der Schubladenausziehführung 21 koppelbar ist.

Bevorzugt weist die Koppelvorrichtung 25 wie im dargestellten Ausführungsbeispiel einen Koppelhebel 36 und eine damit zusammenwirkende Koppelkontur 39 auf, wobei der Koppelhebel 36 an der Schubladenseitenwand 1, bevorzugt am Frontwandhalter 14, und die Koppelkontur 39 an der Ladenschiene 23, bevorzugt an einem Vertikalsteg 58 der Ladenschiene 23, angeordnet ist, oder umgekehrt.

Alternativ oder ergänzend kann die Schubladenseitenwand 1 mit der Ladenschiene 23 über einen Haken 55 verbunden sein, welcher in eine Öffnung 56 einsteckbar ist, vorzugsweise wobei der Haken 55 an der Ladenschiene 23 und die Öffnung 56 im Rückwandhalter 16 angeordnet sind.

Der Frontwandhalter 14 kann dazu ausgebildet sein, ein mit einer Frontblende 18 zu verbindendes Verbindungselement 37 aufzunehmen und, vorzugsweise lösbar, zu halten.

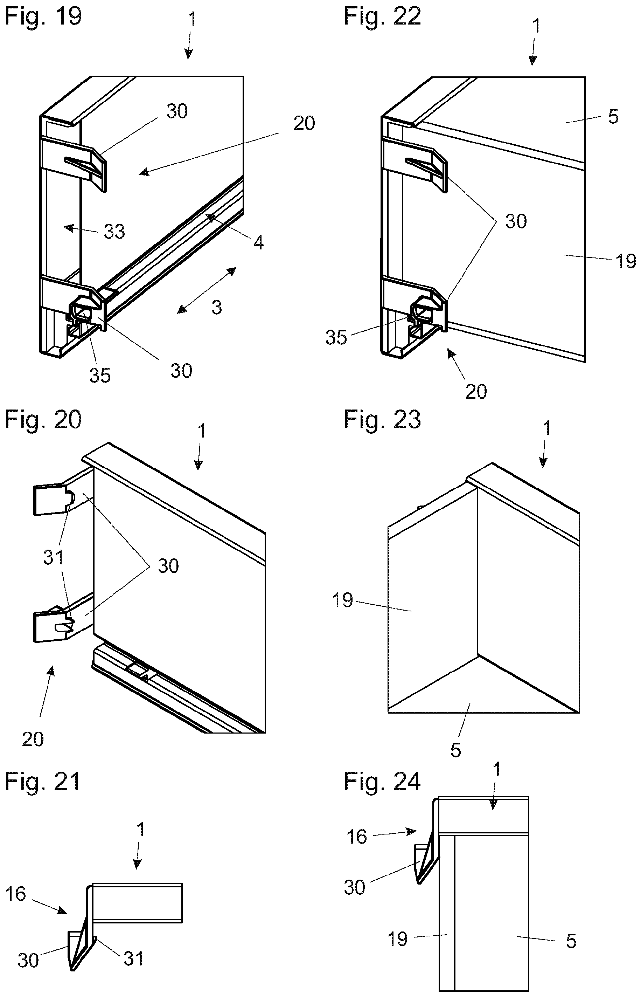

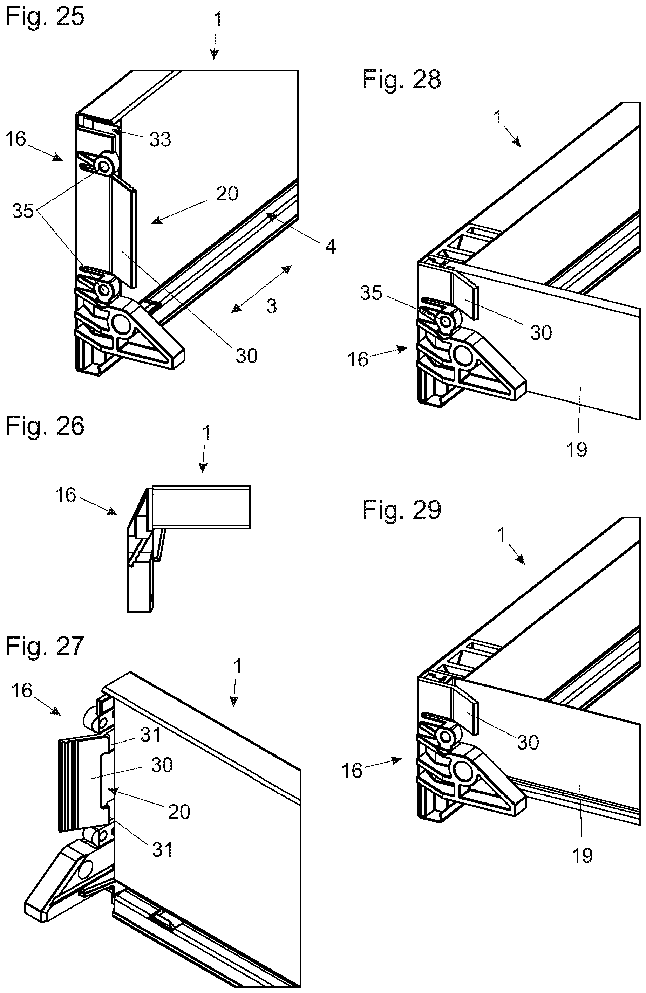

Die Fig. 19 bis 24 zeigen einen Rückwandhalter 16 gemäß einem zweiten, nicht erfindungsgemäßen Ausführungsbeispiel jeweils ohne und mit Rückwand 19 in einer perspektivischen Ansicht von hinten (Fig. 19, 22), von vorne (Fig. 20, 23) und in einer Draufsicht von oben (Fig. 21, 24). Die Fig. 25 bis 29 zeigen einen Rückwandhalter 16 gemäß einem dritten, nicht erfindungsgemäßen Ausführungsbeispiel in einer perspektivischen Ansicht von hinten (Fig. 25, 28, 29), von vorne (Fig. 27) und in einer Draufsicht von oben (Fig. 26), wobei die Fig. 28 in einer aufgeschnittenen Ansicht eine verbundene Holzrückwand und die Fig. 29 in einer aufgeschnittenen Ansicht eine verbundene Metallrückwand zeigt.

Bei diesen Ausführungsbeispielen weist die wenigstens eine Klemmvorrichtung 20 wenigstens eine federndes Klemmteil 30 auf, wobei das Klemmteil 30 wenigstens eine in Richtung der Schubladenseitenwand 1 weisende Klemmkontur 31 aufweist und im Wesentlichen quer zur Schubladenseitenwand 1 ausgerichtet ist. Beim Einschieben eines Randes der Rückwand 19 wird das Klemmteil 30 entgegen einer Federwirkung ausgelenkt und drückt im eingeschobenen Zustand der Rückwand 19 mit der Klemmkontur 31 auf die Rückwand 19. Die Klemmkontur 31 kann wenigstens einen Widerhaken aufweisen.

Die Klemmvorrichtung 20 kann dazu ausgebildet sein, sowohl eine im Wesentlichen quaderförmige Rückwand 19 aus einem Holzwerkstoff (vgl. Fig. 28) als auch eine profilierte Rückwand 19 aus einem metallischen Werkstoff (vgl. Fig. 29) klemmend zu halten.

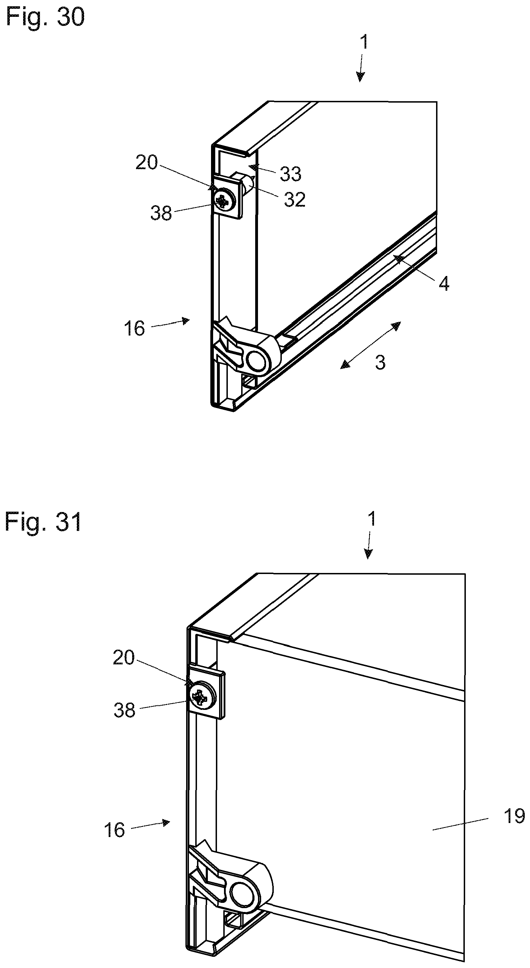

Die Fig. 30 und 31 zeigen einen Rückwandhalter 16 gemäß einem vierten, nicht erfindungsgemäßen Ausführungsbeispiel in einer perspektivischen Ansicht von hinten, und zwar ohne Rückwand 19 (Fig. 30) und mit Rückwand 19 (Fig. 31).

Bei diesem Ausführungsbeispiel umfasst die wenigstens eine Klemmvorrichtung 20 wenigstens eine drehbar gelagertes Klemmelement 32, wobei die Rückwand 19 durch das Klemmelement 32 in eine Richtung quer zu einer Längsrichtung 3 der Schubladenseitenwand 1 mit einer Klemmkraft beaufschlagbar ist. Das Klemmelement 32 ist an einer Innenseite eines Hohlprofils der Schubladenseitenwand 1 abstützbar und an eine Stirnseite der Rückwand 19 anlegbar. Das Klemmelement 32 weist eine von einer rotationssymmetrischen Zylinderform abweichende Außenkontur auf, welche bei einer Rotation eine Stirnseite der Rückwand 19 verdrängen und so eine Klemmkraft auf die Rückwand 19 in eine Richtung quer zu einer Längsrichtung 3 der Schubladenseitenwand 1 ausüben kann.

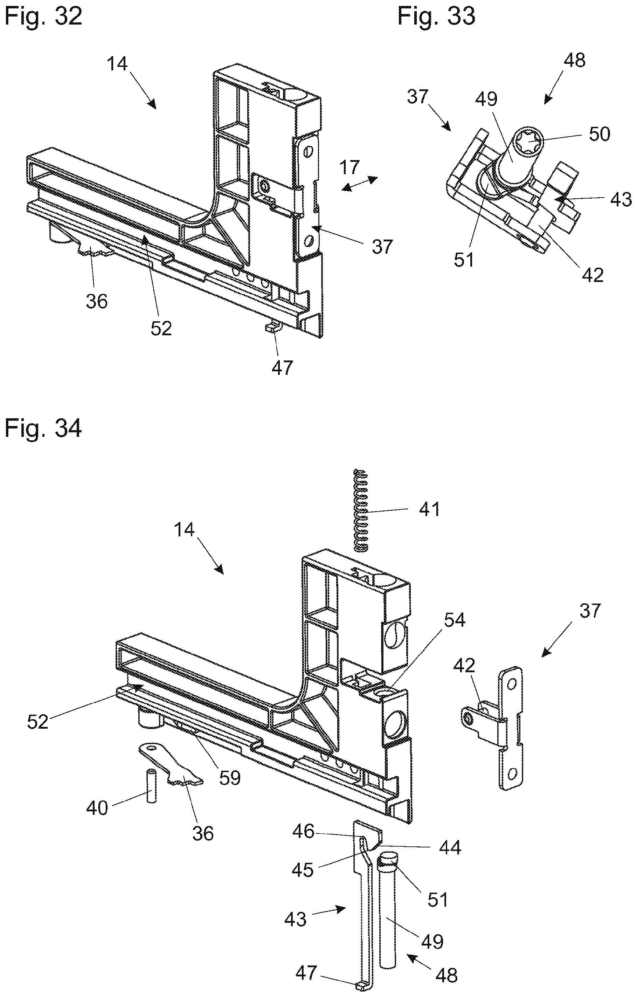

Die Fig. 32 bis 34 zeigen einen Frontwandhalter 14 zum Verbinden einer Frontblende 18 mit einer Schubladenseitenwand 1, wobei Fig. 32 eine perspektivische Ansicht, Fig. 34 eine Explosionsansicht und Fig. 33 die Einstellung eines Verbindungselements 37 relativ zum Frontwandhalter 14 zeigt.

Der Frontwandhalter 14 weist wenigstens eine Befestigungsvorrichtung auf, über welche das Verbindungselement 37, vorzugsweise lösbar, an und/oder in dem Frontwandhalter 14 befestigt ist.

Hierzu kann die Befestigungsvorrichtung wie im dargestellten Fall wenigstens einen federbelasteten und verschiebbar gelagerten Befestigungsriegel 43 aufweisen. Es ist eine Feder 41 vorgesehen, welche den Befestigungsriegel 43 in Richtung einer Befestigungsstellung mit einer Kraft beaufschlagt.

Zur Verbindung des Verbindungselements 37 mit dem Befestigungsriegel 43 tritt ein Bolzen 42 des Verbindungselements 37 in Kontakt mit einer Schrägfläche 44 des Befestigungsriegels 43, wobei der Befestigungsriegel 43 entgegen der Kraft der Feder 41 aus der Befestigungsstellung in eine Lösestellung gedrängt wird. Der Bolzen 42 überwindet eine Nase 45 und gelangt unter dem Einfluss der Federkraft in eine Mulde 46. Der Befestigungsriegel 43 wird in die Befestigungsstellung zurückbewegt.

Zur Entriegelung weist der Befestigungsriegel 43 an einer Unterseite einen Aktuator 47 auf.

Es ist wenigstens eine Einstellvorrichtung 48 vorgesehen, mit welcher das Verbindungselement 37 zumindest in eine Richtung 17 quer zu einer Längsrichtung 3 der Schubladenseitenwand 1 relativ zur Schubladenseitenwand 1 einstellbar ist.

Die Einstellvorrichtung 48 kann wie im dargestellten Fall eine Säule 49 aufweisen, welche an einem ersten Ende ein Betätigungselement 50 und an einem zweiten dem ersten Ende gegenüberliegenden Ende einen Exzenter 51 umfasst. Die Säule 49 kann in einer korrespondierenden Ausnehmung 54 eines Grundkörpers des Verbindungselements 37 gelagert sein. Bei einer Betätigung der Einstellvorrichtung 48 verschiebt der Exzenter 51, welcher in Eingriff mit dem Verbindungselement 37 steht oder bringbar ist, das Verbindungselement 37 eine Richtung 17 quer zu einer Längsrichtung 3 der Schubladenseitenwand 1 relativ zur Schubladenseitenwand 1.

Der Koppelhebel 36 der Koppelvorrichtung 25 zur lösbaren Koppelung der Schubladenseitenwand 1 mit der Schubladenausziehführung 21 ist um eine Drehachse 40 drehbar am Verbindungselement 37 gelagert. Es ist ein Federelement 59 vorgesehen, welches den Koppelhebel 36 in Richtung einer Koppelstellung mit einer Kraft beaufschlagt.

Der Frontwandhalter 14 weist zumindest im Bereich der Nut 4 dieselbe Querschnittsform auf wie das Blechstück 9. Insbesondere umfasst der Frontwandhalter 14 eine Aufnahmenut 52, in welcher die Nut 4 des Blechstücks 9 zumindest bereichsweise anordenbar ist.

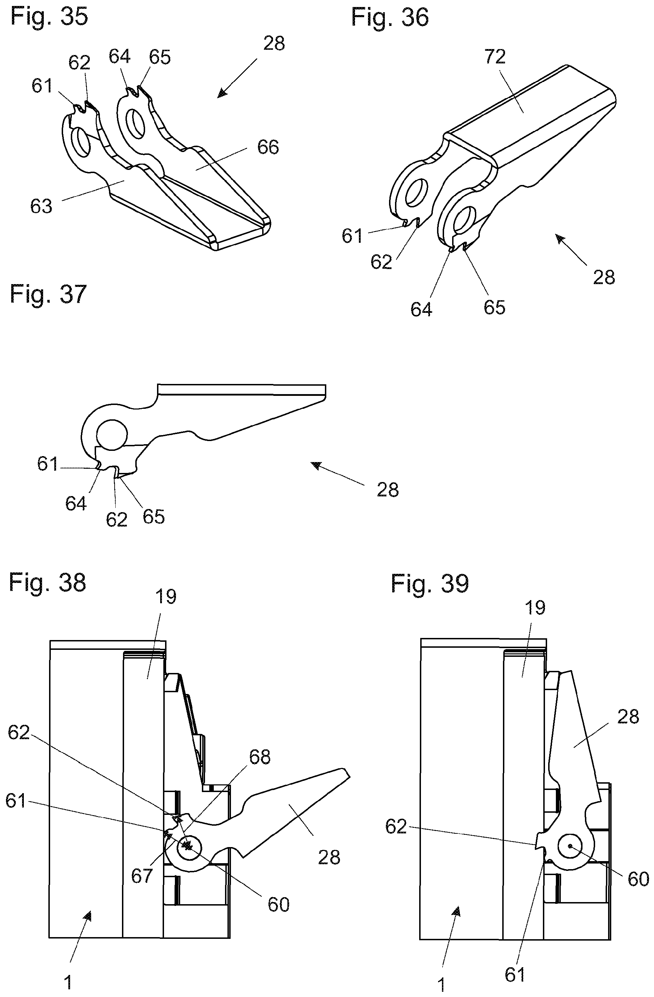

Die Figuren 35 bis 37 zeigen ein weiteres, erfindungsgemäßes Ausführungsbeispiel eines Klemmhebels 28 in unterschiedlichen Ansichten.

Gemäß diesem Ausführungsbeispiel weist der Klemmhebel 28 mehr als eine Schneide 29 auf, wobei eine erste Schneide 61, 62 an einem ersten Steg 63 des Klemmhebels 28 und eine zweite Schneide 64, 65 an einem zum ersten Steg 63 beabstandeten zweiten Steg 66 des Klemmhebels 28 angeordnet ist.

Die beiden Stege 63 und 66 können über einen Quersteg 72 miteinander verbunden sein. Insgesamt ergibt sich dadurch in einem Querschnitt im Wesentlichen eine U-Form.

Wie aus der Figur 37 hervorgeht, weisen die Schneiden 61, 62 gegenüber den Schneiden 64, 65 in eine Schwenkrichtung des Klemmhebels 28 gesehen einen Winkelversatz auf. Dadurch kann der Kraftanstieg bei der Bewegung des Klemmhebels 28 in die Klemmstellung reduziert werden, da auf diese Weise die Schneiden 61 und 64 und die Schneiden 62 und 65 leicht zeitversetzt in Eingriff mit dem Material der Rückwand 19 gelangen.

In den Figuren 38 und 39 ist eine Anordnung aus einer Schubladenseitenwand 1, einer Rückwand 19 und einem Rückwandhalter in einer Querschnittsansicht dargestellt, wobei der Klemmhebel 28 in Figur 38 in der Lösestellung und in Figur 39 in der Klemmstellung angeordnet ist.

Der Klemmhebel 28 ist bei diesem und bei den zuvor beschriebenen Ausführungsbeispielen, bei denen ein Klemmhebel vorgesehen war, um eine Schwenkachse 60 verschwenkbar am Rückwandhalter 16 gelagert ist, wobei die Schwenkachse 60 im Wesentlichen normal zur Schubladenseitenwand 1 und in einem Gebrauchszustand der Schubladenseitenwand 1 im Wesentlichen horizontal verläuft.

Am Klemmhebel 28 sind zumindest zwei Schneiden 61, 62 in einer gemeinsamen Ebene angeordnet, wobei die Schneiden 61, 62 unterschiedliche maximale radiale Erstreckungen 67, 68 zur Schwenkachse 60 des Klemmhebels 28 aufweisen, wobei die Schneiden 61, 62 derart am Klemmhebel 28 angeordnet sind, dass im Zuge einer Bewegung des Klemmhebels 28 in die Klemmstellung zuerst eine Schneide 61 mit einer kleineren maximalen radialen Erstreckung 67 und dann eine Schneide 62 mit einer größeren maximalen radialen Erstreckung 68 in das Material der Rückwand 19 versenkbar ist. Diese Maßnahme dient ebenfalls dazu, Kraftanstieg bei der Bewegung des Klemmhebels 28 in die Klemmstellung zu reduzieren.

Die Schneiden 64 und 65 sind analog zu den Schneiden 61 und 62 ausgebildet.

Insgesamt gesehen weist der Klemmhebel 28 bei den Ausführungsbeispielen der Figuren 35 bis 39 vier Schneiden 61, 62, 64 und 65 auf.

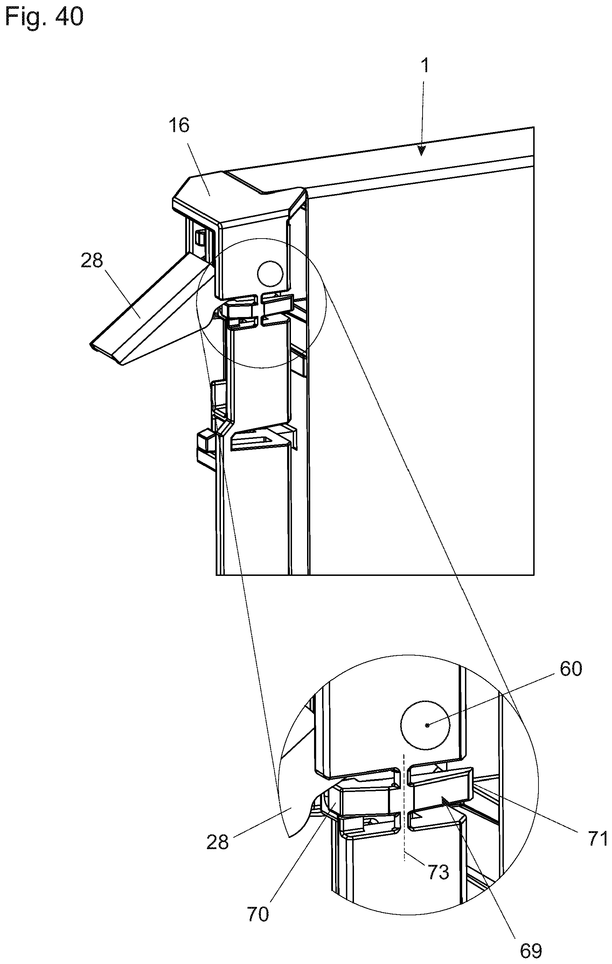

Die Figuren 40 bis 42 zeigen eine Anordnung aus einer Schubladenseitenwand 1, einem Rückwandhalter 16 und einer Rückwand 19 gemäß einem weiteren, erfindungsgemäßen Ausführungsbeispiel, wobei die Rückwand 19 unterschiedliche Relativstellungen zur Schubladenseitenwand 1 einnimmt.

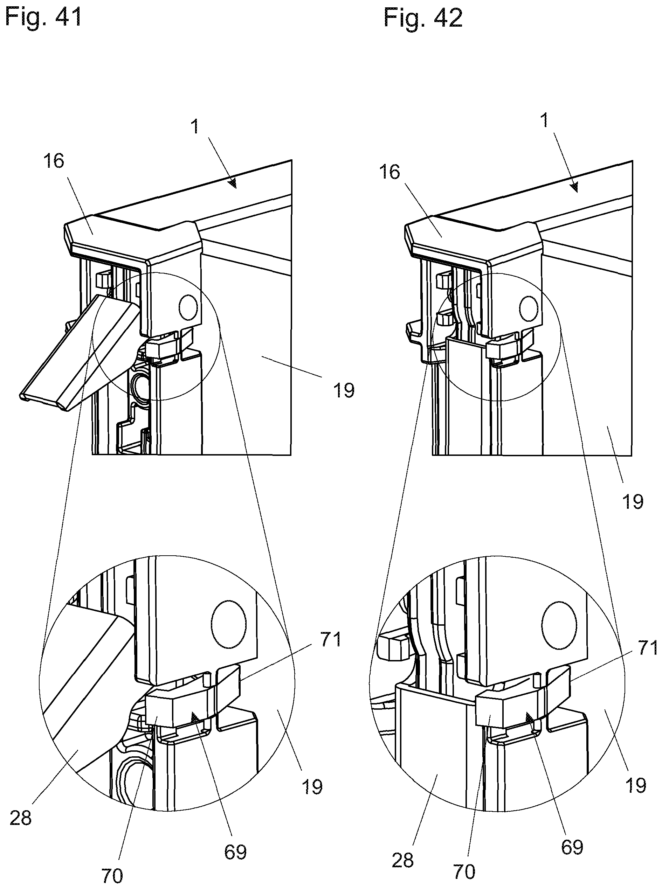

Bei der Montage der Rückwand 19 kann es vorkommen, dass der Klemmhebel 28 bereits in der Klemmstellung angeordnet ist. Wenn man nun versucht, die Rückwand 19 in den Rückwandhalter 16 zu schieben, so besteht die Gefahr, dass der Klemmhebel 28 und/oder die Rückwand 19 beschädigt werden und eine ordnungsgemäße Montage nicht mehr möglich ist. Um dies zu verhindern, kann wenigstens eine Haltevorrichtung 69 vorgesehen sein, welche den Klemmhebel 28 in einer ersten Stellung (vgl. Fig. 40) in einer Montagestellung hält und in einer zweiten Stellung die Bewegung des Klemmhebels 28 in die Klemmstellung freigibt (vgl. Fig. 41 und 42).

Dabei bietet es sich an, dass die Haltevorrichtung 69 derart am Rückwandhalter 16 angeordnet ist, dass der Klemmhebel 28 durch ein Einfügen der Rückwand 19 in den Rückwandhalter 16 aus der ersten in die zweite Stellung überführbar ist, und/oder dass die Haltevorrichtung 69 als drehbar gelagerte Klinke ausgebildet ist, welche ein erstes Ende 70 zum Halten des Klemmhebels 28 in der Montagestellung und/oder ein zweites Ende 71 zur Kontaktierung der Rückwand 19 aufweist.

Die Klinke kann um Kippachse 73 verkippbar am Rückwandhalter angeordnet sein.

Bevorzugt ist die Haltevorrichtung 69 einstückig am Rückwandhalter ausgebildet.

Die Haltevorrichtung 69 verhindert, dass der Klemmhebel 28 nach unten geschwenkt werden kann, solange keine Rückwand 19 montiert ist. Durch das seitliche Einfahren der Rückwand 19 wird die Klinke um ca. 20 Grad verdreht, gibt den Schwenkweg des Klemmhebels 28 frei (vgl. Fig. 41) und dieser kann in die Klemmstellung verschwenkt werden (vgl. Fig. 42).

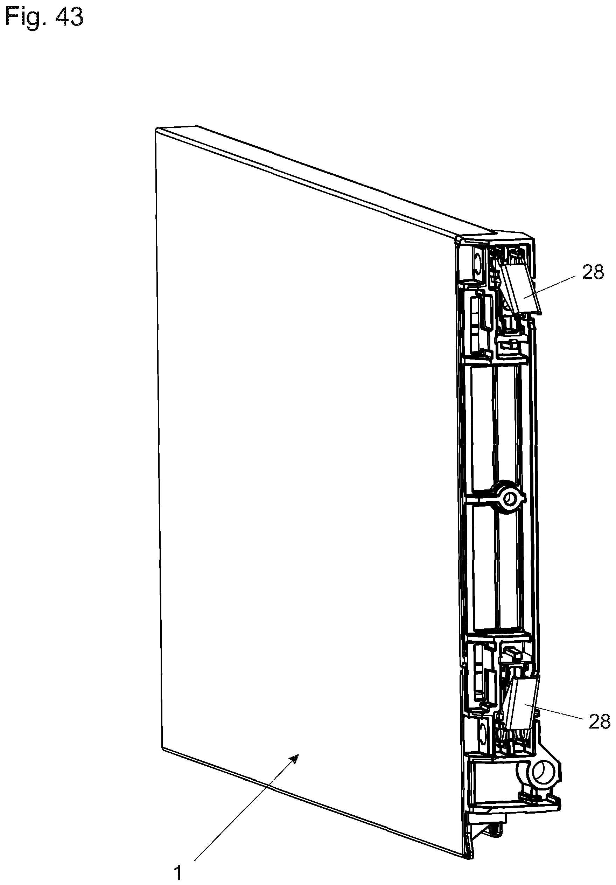

Die Figur 43 zeigt eine Schubladenseitenwand 1 mit einem Rückwandhalter 16 gemäß einem weiteren, erfindungsgemäßen Ausführungsbeispiel. Dabei weist die wenigstens eine Klemmvorrichtung 20 wenigstens zwei in einer vertikalen Richtung voneinander beabstandete Klemmhebel 28 auf, vorzugsweise wobei die Klemmhebel 28 wie im dargestellten Fall im Wesentlichen spiegelsymmetrisch angeordnet sind. Die spiegelsymmetrische Anordnung ist aber nicht zwingend erforderlich.

Das Vorsehen von wenigstens zwei Klemmhebeln 28 ist insbesondere bei hohen Schubladenseitenwänden 1 vorteilhaft, um die Rückwand 19 stabil zu halten.

## Patentansprüche

1. Schubladenseitenwand (1) für eine Schublade (2), umfassend wenigstens einen Rückwandhalter (16), mit welchem eine Rückwand (19) quer zur Schubladenseitenwand (1) haltbar ist, wobei der Rückwandhalter (16) wenigstens eine Klemmvorrichtung (20) aufweist, mit welcher die Rückwand (19) klemmend haltbar ist, wobei die wenigstens eine Klemmvorrichtung (20) wenigstens einen Klemmhebel (28) aufweist, welcher zwischen einer Klemmstellung und einer Lösestellung bewegbar ist, wobei der wenigstens eine Klemmhebel (28) um eine Schwenkachse (60) verschwenkbar am wenigstens einen Rückwandhalter (16) gelagert ist, und wobei die Schwenkachse (60) im Wesentlichen normal zur Schubladenseitenwand (1) verläuft, **dadurch gekennzeichnet, dass** der Klemmhebel (28) wenigstens eine Schneide (29) aufweist, welche im Zuge einer Bewegung des Klemmhebels (28) in die Klemmstellung in das Material der Rückwand (19) versenkbar ist.

2. Schubladenseitenwand (1) nach Anspruch 1, wobei der wenigstens eine Rückwandhalter (16) wenigstens eine quer zu einer Längsrichtung (3) der Schubladenseitenwand (1) verlaufende Haltenut (33) aufweist, in welcher die Rückwand (19) bereichsweise anordenbar ist.

3. Schubladenseitenwand (1) nach Anspruch 1 oder 2, wobei der wenigstens eine Rückwandhalter (16) wenigstens eine Spielausgleichsvorrichtung (34), welche vorzugsweise wenigstens einen federnden Lappen aufweist, umfasst, mit welcher die Rückwand (19) in Richtung der Schubladenseitenwand (1) drängbar ist.

4. Schubladenseitenwand (1) nach einem der Ansprüche 1 bis 3, wobei der wenigstens eine Rückwandhalter (16) wenigstens eine Befestigungsvorrichtung (35) aufweist, über welche die Rückwand (19) zusätzlich zur wenigstens eine Klemmvorrichtung (20) befestigbar ist.

5. Schubladenseitenwand (1) nach einem der Ansprüche 1 bis 4, wobei die Schubladenseitenwand (1) wenigstens eine sich in eine Längsrichtung (3) der Schubladenseitenwand (1) verlaufende Nut (4) zur Aufnahme eines Randes eines Schubladenbodens (5) umfasst, die Nut (4) wenigstens einen oberen Haltesteg (6) und einen davon beabstandeten und im Wesentlichen parallel verlaufenden unteren Haltesteg (7) aufweist, zwischen denen der Rand des Schubladenbodens (5) anordenbar ist, zumindest eine Seitenfläche (8) der Schubladenseitenwand (1) aus einem einstückigen Blechstück (9) gebildet ist, und die Nut (4) samt den beiden Haltestegen (6, 7) in das Blechstück (9) durch Umbiegungen eingeformt ist.

6. Schubladenseitenwand (1) nach Anspruch 5, wobei an der Nut (4), vorzugsweise am unteren Haltesteg (7) der Nut (4), Befestigungsmittel (13), vorzugsweise Krallen, zur, vorzugsweise klemmenden, Befestigung des Randes des Schubladenbodens (5) angeordnet sind, vorzugsweise wobei die Befestigungsmittel (13) einstückig im Blechstück (9) ausgebildet, insbesondere ausgestanzt, sind.

7. Schubladenseitenwand (1) nach einem der Ansprüche 1 bis 6, wobei die Schwenkachse (60) in einem Gebrauchszustand der Schubladenseitenwand (1) im Wesentlichen horizontal verläuft.

8. Schubladenseitenwand (1) nach einem der Ansprüche 1 bis 7, wobei der wenigstens eine Klemmhebel (28) mehr als eine Schneide (29) aufweist, vorzugsweise wobei
- eine erste Schneide (61, 62) an einem ersten Steg (63) des Klemmhebels (28) und eine zweite Schneide (64, 65) an einem zum ersten Steg (63) beabstandeten zweiten Steg (66) des Klemmhebels (28) angeordnet ist, bevorzugt, wobei die beiden Schneiden (61, 62, 64, 65) in eine Schwenkrichtung des Klemmhebels (28) gesehen einen Winkelversatz aufweisen, und/oder
- am Klemmhebel (28) zumindest zwei Schneiden (61, 62, 64, 65) in einer gemeinsamen Ebene angeordnet sind, wobei die Schneiden (61, 62, 64, 65) unterschiedliche maximale radiale Erstreckungen (67, 68) zu einer Schwenkachse (60) des Klemmhebels (28) aufweisen, wobei die Schneiden (61, 62, 64, 65) derart am Klemmhebel (28) angeordnet sind, dass im Zuge einer Bewegung des Klemmhebels (28) in die Klemmstellung zuerst eine Schneide (61, 64) mit einer kleineren maximalen radialen Erstreckung (67) und dann eine Schneide (62, 65) mit einer größeren maximalen radialen Erstreckung (68) in das Material der Rückwand (19) versenkbar ist.

9. Schubladenseitenwand (1) nach einem der Ansprüche 1 bis 8, wobei wenigstens eine Haltevorrichtung (69) vorgesehen ist, welche den wenigstens einen Klemmhebel (28) in einer ersten Stellung in einer Montagestellung hält und in einer zweiten Stellung die Bewegung des wenigstens einen Klemmhebels (28) in die Klemmstellung freigibt.

10. Schubladenseitenwand (1) nach Anspruch 9, wobei die wenigstens eine Haltevorrichtung (69) derart am Rückwandhalter (16) angeordnet ist, dass der Klemmhebel (28) durch ein Einfügen der Rückwand (19) in den Rückwandhalter (16) aus der ersten in die zweite Stellung überführbar ist, und/oder wobei die wenigstens eine Haltevorrichtung (69) als drehbar gelagerte Klinke ausgebildet ist, welche ein erstes Ende (70) zum Halten des Klemmhebels (28) in der Montagestellung und/oder ein zweites Ende (71) zur Kontaktierung der Rückwand (19) aufweist.

11. Schubladenseitenwand (1) nach einem der Ansprüche 1 bis 10, wobei die wenigstens eine Klemmvorrichtung (20) wenigstens zwei, vorzugsweise in einer vertikalen Richtung, voneinander beabstandete Klemmhebel (28) aufweist, vorzugsweise wobei die Klemmhebel (28) im Wesentlichen spiegelsymmetrisch angeordnet sind.

12. Anordnung aus wenigstens einer Schubladenseitenwand (1) nach einem der Ansprüche 1 bis 11 und wenigstens einer Schubladenausziehführung (21), welche eine mit einem Möbelkorpus zu verbindende Korpusschiene (22) und wenigstens eine relativ dazu verschiebbare Ladenschiene (23) aufweist.

13. Anordnung nach Anspruch 12, wobei wenigstens eine Koppelvorrichtung (25) vorgesehen ist, mit welcher die Schubladenseitenwand (1), vorzugsweise lösbar, mit der Schubladenausziehführung (21) koppelbar ist.

14. Anordnung nach Anspruch 12 oder 13, wobei die Anordnung eine Rückwand (19), eine Frontblende (18), und/oder einen Schubladenboden (5) aufweist, bevorzugt wobei eine Rückwand (19) und ein Schubladenboden (5) vorgesehen sind, welche im Wesentlichen dieselbe Dicke (26, 27), besonders bevorzugt von weniger als 1 cm, aufweisen, und/oder wobei die Rückwand (19) und der Schubladenboden (5) durch eine gemeinsame Fügebewegung mit der Schubladenseitenwand (1), besonders bevorzugt klemmend, befestigbar ist.

## Claims

1. A drawer lateral wall (1) for a drawer (2), comprising at least one rear wall mounting (16) with which a rear wall (19) can be held transversely to the drawer lateral wall (1), wherein the rear wall mounting (16) has at least one clamping device (20) by means of which the rear wall (19) can be held in a clamping manner, wherein the at least one clamping device (20) has at least one clamping lever (28) which is movable between a clamping position and a release position, wherein the at least one clamping lever (28) is mounted on the at least one rear wall mounting (16) so as to be pivotable about a pivot axis (60), and wherein the pivot axis (60) runs essentially normal to the drawer lateral wall (1), **characterized in that** the clamping lever (28) has at least one cutting edge (29) which can be sunk into the material of the rear wall (19) during a movement of the clamping lever (28) into the clamping position.

2. The drawer lateral wall (1) according to claim 1, wherein the at least one rear wall mounting (16) has at least one mounting groove (33) running transversely to a longitudinal direction (3) of the drawer lateral wall (1), in which the rear wall (19) can be arranged in regions.

3. The drawer lateral wall (1) according to claim 1 or 2, wherein the at least one rear wall mounting (16) comprises at least one play compensation device (34), which preferably has at least one resilient tab, with which the rear wall (19) can be urged in the direction of the drawer lateral wall (1).

4. The drawer lateral wall (1) according to any one of claims 1 to 3, wherein the at least one rear wall mounting (16) has at least one fastening device (35) via which the rear wall (19) can be fastened in addition to the at least one clamping device (20).

5. The drawer lateral wall (1) according to any one of claims 1 to 4, wherein the drawer lateral wall (1) comprises at least one groove (4) running in a longitudinal direction (3) of the drawer lateral wall (1) for receiving an edge of a drawer base (5), the groove (4) has at least one upper mounting web (6) and a lower mounting web (7) spaced therefrom and running essentially parallel, between which the edge of the drawer base (5) can be arranged, at least one lateral surface (8) of the drawer lateral wall (1) is formed from a one-piece sheet metal piece (9), and the groove (4) together with the two mounting webs (6, 7) is formed into the sheet metal piece (9) by bending.

6. The drawer lateral wall (1) according to claim 5, wherein fastening means (13), preferably claws, for fastening the edge of the drawer base (5), preferably in a clamping manner, are arranged on the groove (4), preferably on the lower mounting web (7) of the groove (4), preferably wherein the fastening means (13) are formed in one piece in the sheet metal piece (9), in particular punched out.

7. The drawer lateral wall (1) according to one of claims 1 to 6, wherein the pivot axis (60) I substantially horizontal in a state of use of the drawer lateral wall (1).

8. The drawer lateral wall (1) according to one of claims 1 to 7, wherein the at least one clamping lever (28) has more than one cutting edge (29), preferably wherein
- a first cutting edge (61, 62) is arranged on a first web (63) of the clamping lever (28) and a second cutting edge (64, 65) is arranged on a second web (66) of the clamping lever (28) spaced apart from the first web (63), preferably, wherein the two cutting edges (61, 62, 64, 65) have an angular offset when viewed in a pivoting direction of the clamping lever (28), and/or
- at least two cutting edges (61, 62, 64, 65) are arranged on the clamping lever (28) in a common plane, the cutting edges (61, 62, 64, 65) having different maximum radial extensions (67, 68) relative to a pivot axis (60) of the clamping lever (28), wherein the cutting edges (61, 62, 64, 65) are arranged on the clamping lever (28) in such a way that in the course of a movement of the clamping lever (28) into the clamping position, first a cutting edge (61, 64) with a smaller maximum radial extension (67) and then a cutting edge (62, 65) with a larger maximum radial extension (68) can be sunk into the material of the rear wall (19).

9. The drawer lateral wall (1) according to any one of claims 1 to 8, wherein at least one mounting device (69) is provided which holds the at least one clamping lever (28) in a first position in an assembly position and in a second position releases the movement of the at least one clamping lever (28) into the clamping position.

10. The drawer lateral wall (1) according to claim 9, wherein the at least one mounting device (69) is arranged on the rear wall mounting (16) in such a way that the clamping lever (28) can be transferred from the first into the second position by inserting the rear wall (19) into the rear wall mounting (16), and/or wherein the at least one mounting device (69) is designed as a rotatably mounted latch, which has a first end (70) for holding the clamping lever (28) in the assembly position and/or a second end (71) for contacting the rear wall (19).

11. The drawer lateral wall (1) according to any one of claims 1 to 10, wherein the at least one clamping device (20) has at least two clamping levers (28) spaced apart from one another, preferably in a vertical direction, preferably wherein the clamping levers (28) are arranged substantially mirror-symmetrically.

12. An arrangement comprising at least one drawer lateral wall (1) according to any one of claims 1 to 11 and at least one drawer extraction guide (21), which has a body rail (22) to be connected to a furniture body and at least one drawer rail (23) displaceable relative thereto.

13. The arrangement according to claim 12, wherein at least one coupling device (25) is provided, with which the drawer lateral wall (1) can be coupled, preferably releasably, to the drawer extraction guide (21).

14. The arrangement according to claim 12 or 13, wherein the arrangement has a rear wall (19), a front wall (18), and/or a drawer base (5), preferably wherein a rear wall (19) and a drawer base (5) are provided which have substantially the same thickness (26, 27), particularly preferably of less than 1 cm, and/or wherein the rear wall (19) and the drawer base (5) can be fastened to the drawer lateral wall (1) by a common joining movement, particularly preferably by clamping.

## Revendications

1. Paroi latérale de tiroir (1) pour un tiroir (2), comprenant au moins un support de paroi arrière (16), au moyen duquel une paroi arrière (19) peut être maintenue transversalement à la paroi latérale de tiroir (1), le support de paroi arrière (16) présentant au moins un dispositif de serrage (20), au moyen duquel la paroi arrière (19) peut être maintenue par serrage, ledit au moins un dispositif de serrage (20) présentant au moins un levier de serrage (28) mobile entre une position de serrage et une position de libération, ledit au moins un levier de serrage (28) étant monté sur ledit au moins un support de paroi arrière (16) en étant pivotant autour d'un axe de pivotement (60), et l'axe de pivotement (60) s'étendant sensiblement perpendiculairement à la paroi latérale de tiroir (1), **caractérisée en ce que** le levier de serrage (28) présente au moins une arête vive (29) qui peut être enfoncée dans le matériau de la paroi arrière (19) au cours d'un mouvement du levier de serrage (28) vers la position de serrage.

2. Paroi latérale de tiroir (1) selon la revendication 1, dans laquelle ledit au moins un support de paroi arrière (16) présente au moins une rainure de maintien (33) s'étendant transversalement à une direction longitudinale (3) de la paroi latérale de tiroir (1), et dans laquelle la paroi arrière (19) peut être disposée par zones.

3. Paroi latérale de tiroir (1) selon la revendication 1 ou 2, dans laquelle ledit au moins un support de paroi arrière (16) comprend au moins un dispositif de compensation de jeu (34), muni de préférence d'au moins une languette élastique, au moyen duquel la paroi arrière (19) peut être poussée en direction de la paroi latérale de tiroir (1).

4. Paroi latérale de tiroir (1) selon l'une des revendications 1 à 3, dans laquelle ledit au moins un support de paroi arrière (16) présente au moins un dispositif de fixation (35), par l'intermédiaire duquel la paroi arrière (19) peut être fixée en complément dudit au moins un dispositif de serrage (20).

5. Paroi latérale de tiroir (1) selon l'une des revendications 1 à 4, dans laquelle la paroi latérale de tiroir (1) comprend au moins une rainure (4) s'étendant dans une direction longitudinale (3) de la paroi latérale de tiroir (1) et destinée à recevoir un bord d'un fond de tiroir (5), la rainure (4) présentant au moins une branche de maintien supérieure (6) et une branche de maintien inférieure (7) espacée de celle-ci et s'étendant sensiblement parallèlement à celle-ci, entre lesquelles le bord du fond de tiroir (5) peut être disposé, au moins une surface latérale (8) de la paroi latérale de tiroir (1) étant formée à partir d'une pièce de tôle monobloc (9), et la rainure (4), avec les deux branches de maintien (6, 7), étant formée dans la pièce de tôle (9) par pliages.

6. Paroi latérale de tiroir (1) selon la revendication 5, dans laquelle des moyens de fixation (13), de préférence des griffes, destinés à la fixation, de préférence par serrage, du bord du fond de tiroir (5) sont disposés sur la rainure (4), de préférence sur la branche de maintien inférieure (7) de la rainure (4), les moyens de fixation (13) étant de préférence formés d'un seul tenant dans la pièce de tôle (9), en particulier découpés à la matrice.

7. Paroi latérale de tiroir (1) selon l'une des revendications 1 à 6, dans laquelle l'axe de pivotement (60) s'étend sensiblement horizontalement dans un état d'utilisation de la paroi latérale de tiroir (1).

8. Paroi latérale de tiroir (1) selon l'une des revendications 1 à 7, dans laquelle ledit au moins un levier de serrage (28) présente plus d'une arête vive (29), de préférence dans laquelle
- une première arête vive (61, 62) est disposée sur une première branche (63) du levier de serrage (28) et une deuxième arête vive (64, 65) est disposée sur une deuxième branche (66) du levier de serrage (28) espacée de la première branche (63), les deux arêtes vives (61, 62, 64, 65), considérées dans une direction de pivotement du levier de serrage (28), présentant de préférence un décalage angulaire, et/ou
- au moins deux arêtes vives (61, 62, 64, 65) sont disposées sur le levier de serrage (28) dans un plan commun, les arêtes vives (61, 62, 64, 65) présentant des extensions radiales maximales (67, 68) différentes par rapport à un axe de pivotement (60) du levier de serrage (28), les arêtes vives (61, 62, 64, 65) étant disposées sur le levier de serrage (28) de telle sorte que, au cours d'un mouvement du levier de serrage (28) vers la position de serrage, d'abord une arête vive (61, 64) présentant une extension radiale maximale (67) plus petite, puis une arête vive (62, 65) présentant une extension radiale maximale (68) plus grande, peuvent être enfoncées dans le matériau de la paroi arrière (19).

9. Paroi latérale de tiroir (1) selon l'une des revendications 1 à 8, dans laquelle au moins un dispositif de maintien (69) est prévu, lequel, dans une première position, maintient ledit au moins un levier de serrage (28) dans une position de montage et, dans une deuxième position, libère le mouvement dudit au moins un levier de serrage (28) vers la position de serrage.

10. Paroi latérale de tiroir (1) selon la revendication 9, dans laquelle ledit au moins un dispositif de maintien (69) est disposé sur le support de paroi arrière (16) de telle sorte que le levier de serrage (28) peut être amené de la première position à la deuxième position par insertion de la paroi arrière (19) dans le support de paroi arrière (16), et/ou dans laquelle ledit au moins un dispositif de maintien (69) est réalisé sous la forme d'un cliquet monté pivotant présentant une première extrémité (70) destinée à maintenir le levier de serrage (28) dans la position de montage et/ou une deuxième extrémité (71) destinée à entrer en contact avec la paroi arrière (19).

11. Paroi latérale de tiroir (1) selon l'une des revendications 1 à 10, dans laquelle ledit au moins un dispositif de serrage (20) présente au moins deux leviers de serrage (28) espacés l'un de l'autre, de préférence dans une direction verticale, les leviers de serrage (28) étant de préférence disposés sensiblement selon une symétrie de miroir.

12. Agencement comprenant au moins une paroi latérale de tiroir (1) selon l'une des revendications 1 à 11 et au moins une glissière d'extraction de tiroir (21), laquelle présente un rail de corps de meuble (22) destiné à être relié à un corps de meuble et au moins un rail de tiroir (23) déplaçable par rapport à celui-ci.

13. Agencement selon la revendication 12, dans lequel au moins un dispositif d'accouplement (25) est prévu, au moyen duquel la paroi latérale de tiroir (1) peut être accouplée, de préférence de manière réversible, à la glissière d'extraction de tiroir (21).

14. Agencement selon la revendication 12 ou 13, dans lequel l'agencement présente une paroi arrière (19), une façade (18) et/ou un fond de tiroir (5), une paroi arrière (19) et un fond de tiroir (5), qui présentent sensiblement la même épaisseur (26, 27), de manière particulièrement préférée inférieure à 1 cm, étant de préférence prévus, et/ou la paroi arrière (19) et le fond de tiroir (5) pouvant être fixés à la paroi latérale de tiroir (1) par un mouvement d'assemblage commun, de manière particulièrement préférée par serrage.
